# EUROPEAN PATENT SPECIFICATION

(11) **EP 4 081 589 B1**
(45) Date of publication and mention of the grant of the patent: **27.12.2023**
(21) Application number: 20842834.2
(22) Date of filing: 21.12.2020
(51) Int. Cl.: C08L 23/08, C08L 53/00

(54) **CROSS-LINKED POLYOLEFIN ELASTOMER FOAMS**
VERNETZTE POLYOLEFINELASTOMERSCHAUMSTOFFE
MOUSSES D'ÉLASTOMÈRE DE POLYOLÉFINES RÉTICULÉES

(30) Priority: 24.12.2019 WO PCT/CN2019/127943
(43) Date of publication of application: 02.11.2022
(73) Proprietor: Dow Global Technologies LLC, Midland, MI 48674 (US)
(72) Inventor: YANG, Hong, Shanghai 201203 (CN); YU, Haiyang, Shanghai 201203 (CN); YAN, Jinliang, Shanghai 201203 (CN); GONG, Yonghua, Shanghai 201203 (CN)
(74) Representative: Boult Wade Tennant LLP
(86) International application number: PCT/US2020/066293
(87) International publication number: WO 2021/133702

(56) References cited:
- WO-A1-2018/060132
- WO-A2-2007/117663

## Description

### Field

Embodiments of the present disclosure are generally related to polyolefin foams, and are more specifically to cross-linked foams comprising polyolefin elastomer and epoxy-containing ethylene interpolymer.

### Background

Artificial leathers are used as a replacement for natural leather in a wide range of applications, including footwear, garment, furniture, automotive, and other applications. For at least some of these applications, heat resistance can be an important factor. For example, car seat applications require that the artificial leather has no foam cell collapse and no surface warpage of the leather after heat aging at temperatures over 100 °C for a predetermined amount of time. WO2007/117663 for example discloses polyolefin compositions for producing foams for automotive applications.

Although propylene-based copolymers have been used to prepare artificial leathers, the compositions had narrow foaming windows. Accordingly, there is a need for alternative polyolefin foams with good foaming and heat resistance properties.

### Summary

Embodiments of the present disclosure meet this need by providing a polyolefin elastomer cross-linked foam that exhibits good heat resistance above 150 °C. According to one or more embodiments herein, a foam is formed from a composition comprising at least 50 wt.% of an ethylene/alpha-olefin copolymer, an olefin block copolymer, or a blend thereof; from 30 wt.% to 50 wt.% of an E/X/Y/Z epoxy-containing ethylene interpolymer; from 0.5 wt.% to 5 wt.% of a blowing agent; from 0.1 wt.% to 1 wt.% of an activator; and less than 0.05 wt.% of a curing agent. The ethylene/alpha-olefin copolymer has a density of from 0.840 g/cc to 0.910 g/cc and a melt index (I₂) from 0.5 to 12.0 g/10 min. The olefin block copolymer has a density of from 0.860 g/cc to 0.890 g/cc and a melt index (I₂) from 0.5 to 12 g/10 min. In the E/X/Y/Z epoxy-containing interpolymer, E is an ethylene monomer comprising greater than 50 wt.% of the interpolymer, X is an (meth)acrylate, alkyl (meth)acrylate, or vinyl acetate comprising from 0 to 40 wt.% of the interpolymer, Y is glycidyl methacrylate and comprises 0.5 to 13 wt.% of the interpolymer, and Z is a copolymer unit derived from comonomers selected from the group consisting of carbon monoxide, sulfur dioxide, and acrylonitrile and comprises from 0 to 10 wt.% of the interpolymer.

### Brief Description of the Drawings

FIG. 1A shows a scanning electron microscope (SEM) image of the foam of Comparative Example A after foaming;
FIG. 1B shows a scanning electron microscope (SEM) image of the foam of Comparative Example B after foaming;
FIG. 1C shows a scanning electron microscope (SEM) image of the foam of Comparative Example C after foaming;
FIG. 1D shows a scanning electron microscope (SEM) image of the foam of Comparative Example D after foaming;
FIG. 1E shows a scanning electron microscope (SEM) image of the foam of Comparative Example E after foaming;
FIG. 1F shows a scanning electron microscope (SEM) image of the foam of Comparative Example B after aging at 80 °C for 2 hours;
FIG. 1G shows a scanning electron microscope (SEM) image of the foam of Comparative Example C after aging at 125 °C for 2 hours;
FIG. 1H shows a scanning electron microscope (SEM) image of the foam of Comparative Example D after aging at 125 °C for 2 hours;
FIG. 1I shows a scanning electron microscope (SEM) image of the foam of Comparative Example E after aging at 125 °C for 2 hours;
FIG. 2A shows a scanning electron microscope (SEM) image of the foam of Example 1 prepared in accordance with one or more embodiments shown and described herein after foaming;
FIG. 2B shows a scanning electron microscope (SEM) image of the foam of Example 2 prepared in accordance with one or more embodiments shown and described herein after foaming;
FIG. 2C shows a scanning electron microscope (SEM) image of the foam of Example 3 prepared in accordance with one or more embodiments shown and described herein after foaming;
FIG. 2D shows a scanning electron microscope (SEM) image of the foam of Example 4 prepared in accordance with one or more embodiments shown and described herein after foaming;
FIG. 2E shows a scanning electron microscope (SEM) image of the foam of Example 1 prepared in accordance with one or more embodiments shown and described herein after aging at 150 °C for 2 hours;
FIG. 2F shows a scanning electron microscope (SEM) image of the foam of Example 2 prepared in accordance with one or more embodiments shown and described herein after aging at 150 °C for 2 hours;
FIG. 2G shows a scanning electron microscope (SEM) image of the foam of Example 3 prepared in accordance with one or more embodiments shown and described herein after aging at 150 °C for 2 hours; and
FIG. 2H shows a scanning electron microscope (SEM) image of the foam of Example 4 prepared in accordance with one or more embodiments shown and described herein after aging at 150 °C for 2 hours.

### Detailed Description

In various embodiments described herein, a composition for forming a foam includes an ethylene/alpha-olefin copolymer, an olefin block copolymer, or a blend thereof; an E/X/Y/Z epoxy-containing ethylene interpolymer; a blowing agent; an activator; and less than 0.05 wt.% of a curing agent. Such embodiments enable the formation of a foam having good heat resistance and mechanical properties without the use of peroxides, as will be described in greater detail below.

As used herein, the term "composition" and like terms mean a mixture of two or more materials, such as a polymer which is blended with other polymers or which contains additive, fillers, or the like. Included in compositions are pre-reaction, reaction, and post-reaction mixtures, the latter of which will include reaction products and by-products as well as unreacted components of the reaction mixture and decomposition products, if any, formed from the one or more components of the pre-reaction or reaction mixture.

"Polymer" means a compound prepared by polymerizing monomers, whether of the same or a different type. The generic term polymer thus embraces the term homopolymer, usually employed to refer to polymers prepared from only one type of monomer, and the term interpolymer as defined below. It also embraces all forms of interpolymers, e.g., random, block, and the like. The terms "ethylene/alpha-olefin polymer" and "propylene/alpha-olefin polymer" are indicative of interpolymers as described below. It is noted that although a polymer is often referred to as being "made of" monomers, "based on" a specified monomer or monomer type, "containing" a specified monomer content, or the like, this obviously understood to be referring to the polymerized remnant of the specified monomer and not to the unpolymerized species.

"Interpolymer" means a polymer prepared by the polymerization of at least two different monomers. This generic term includes copolymers, usually employed to refer to polymers prepared from two or more different monomers, and includes polymers prepared from more than two different monomers, e.g., terpolymers, tetrapolymers, and the like.

"Polyolefin," "polyolefin polymer," "polyolefin resin," and like terms mean a polymer produced from a simple olefin (also called an alkene with the general formula C*ₙ*H*₂ₙ*) as a monomer. Polyethylene is produced by polymerizing ethylene with or without one or more comonomers, polypropylene by polymerizing propylene with or without one or more comonomers, and the like. Thus, polyolefins include interpolymers such as ethylene-alpha-olefin copolymers, propylene-alpha-olefin copolymers, and the like.

"(Meth)acrylic acid" includes methacrylic acid and/or acrylic acid and "(meth)acrylate" includes methacrylate and/or acrylate.

"Calendering" and like terms mean, in the context of various embodiments described herein, a mechanical process in which a molten polymer is converted into a sheet by passing the molten polymer through a series of rollers to coalesce, flatten, and smooth the polymer into a sheet or film.

"Laminating" and like terms mean a process in which a film, typically of plastic or like material, is applied to a substrate which can be another film. The film can be applied to the substrate with or without an adhesive. If without an adhesive, the film and/or substrate can be heated to promote heat or melt lamination. Laminations are products of a laminating process, and these products are multilayered, i.e., they comprise at least two layers, a film layer in contact with a base or substrate layer.

"Foam" and like terms mean a substance that is formed by trapping many gas bubbles in a liquid or solid.

Various embodiments described herein include at least 50 wt.%, or from 50 wt.% to 99 wt.%, based on the composition, of an ethylene/alpha-olefin copolymer, an olefin block copolymer, or a blend thereof.

The term "ethylene/alpha-olefin copolymer" generally refers to polymers comprising ethylene and an alpha-olefin comonomer having 3 or more carbon atoms. In embodiments, ethylene comprises the majority mole fraction of the whole polymer, i.e., ethylene comprises at least 50 mole percent (mol.%) of the whole polymer. For example, ethylene may comprise at least 60 mol.%, at least 70 mol.%, or at least 80 mol.%, with the substantial remainder of the whole polymer comprising at least one other comonomer that is an alpha-olefin having 3 or more carbon atoms. For many ethylene/octene copolymers, the composition may comprise an ethylene content greater than 80 mol.% of the whole polymer and an octene content of from 10 mol.% to 20 mol.% or from 15 mol.% to 20 mol.% of the whole polymer.

In various embodiments, the olefin block copolymer is, for example, an ethylene/alpha-olefin block copolymer. Commercial examples of ethylene/alpha-olefin block copolymer include resins available under the trade name INFUSE^{™}, available from The Dow Chemical Company (Midland, MI).

In various embodiments, the ethylene/alpha-olefin block copolymer may comprise ethylene and one or more copolymerizable alpha-olefin monomers in polymerized form, characterized by multiple blocks or segments of two or more polymerized monomer units differing in chemical or physical properties. The polyolefin elastomers can be multi-block copolymers. In one or more embodiments, the multi-block copolymer can be represented by the formula (AB)n where n is at least 1, preferably an integer greater than 1, such as 2, 3, 4, 5, 10, 15, 20, 30, 40, 50, 60, 70, 80, 90, 100, or higher, "A" represents a hard block, and "B" represents a soft block. In embodiments, As and Bs are linked in a substantially linear fashion, as opposed to a substantially branched or substantially star-shaped fashion. In one or more embodiments, A blocks and B blocks are randomly distributed along the polymer chain and do not have a structure as follows: AAA-AA-BBB-BB. In some embodiments, the block copolymers do not have a third type of block, which comprises different comonomers. In embodiments, each of block A and block B has monomers or comonomers substantially randomly distributed within the block, such that neither block A nor block B comprises two or more sub-segments of distinct composition, such as a tip segment, that has a substantially different composition than the rest of the block.

The ethylene/alpha-olefin block copolymer can include various amounts of "hard" and "soft" blocks. "Hard" blocks refer to blocks of polymerized units in which ethylene is present in an amount greater than about 95 wt.%, and preferably greater than about 98 wt.%, based on the weight of the polymer. In other words, the comonomer content, i.e., the content of monomers other than ethylene, in the hard blocks is less than about 5 wt.%, and preferably less than about 2 wt.%, based on the weight of the polymer. In one or more embodiments, the hard blocks comprise all or substantially all ethylene. "Soft" blocks, on the other hand, refer to blocks of polymerized units in which the comonomer content, i.e., the content of monomers other than ethylene, is greater than about 5 wt.%. For example, the comonomer content may be greater than about 5 wt.%, greater than about 8 wt.%, greater than about 10 wt.%, or greater than about 15 wt.%, based on the weight of the polymer. In various embodiments, the comonomer content in the soft blocks can be greater than about 20 wt.%, greater than about 25 wt.%, greater than about 30 wt.%, greater than about 35 wt.%, greater than about 40 wt.%, greater than about 45 wt.%, greater than about 50 wt.%, or greater than about 60 wt.%, based on the weight of the polymer.

In various embodiments, the soft blocks are present in the ethylene/alpha-olefin block copolymer at amounts from about 1 wt.% to about 99 wt.% of a total weight of the polyolefin elastomer. For example, the soft blocks can be present in the ethylene/alpha-olefin block copolymer from about 5 wt.% to about 95 wt.%, from about 10 wt.% to about 90 wt.%, from about 15 wt.% to about 85 wt.%, from about 20 wt.% to about 80 wt.%, from about 25 wt.% to about 75 wt.%, from about 30 wt.% to about 70 wt.%, from about 35 wt.% to about 65 wt.%, from about 40 wt.% to about 60 wt.%, or from about 45 wt.% to about 55 wt.% of the total weight of the ethylene/alpha-olefin block copolymer. Conversely, the hard blocks can be present in similar ranges. The soft block and hard block weight percentages can be calculated based on data obtained from DSC or NMR. Such methods and calculations are disclosed in U.S. Patent Application Publication No. 2006/0199930.

Examples of alpha-olefin comonomers that may be used to form the ethylene/alpha-olefin block copolymer include, by way of example and not limitation, propylene, isobutylene, 1-butene, 1-pentene, 1-hexene, 1-heptene, 1-octene, 1-nonene, 1-decene, and 1-dodecene, 1-tetradecene, 1-hexadecene, 1-octadecent, 1-eicosene, 3-methyl-1-butene, 3-methyl-1-penten, 4-methyl-1-penten, 4,6-dimethyle-1-heptene, 4-vinylcyclohexene, vinylcyclohexane, norbornadiene, ethylidene norbornene, cyclopentene, cyclohexene, dicyclopentadiene, cyclooctene, C₄-C₄₀ dienes, other C₄-C₄₀ alpha-olefins, and the like. In a further embodiment, the alpha-olefin comonomers may comprise C₄-C₈ comonomers. Comonomer content may be measured using any suitable technique, such as techniques based on nuclear magnetic resonance ("NMR") spectroscopy, and, for example, by ¹³C NMR analysis as described in U.S. Patent No. 7,498,282.

In various embodiments, the ethylene/alpha-olefin block copolymer has a melt index (I₂) of from about 0.5 to about 30.0 g/10 min, as determined in accordance with ASTM D1238 (190 °C; 2.16 kg). For example, the ethylene/alpha-olefin block copolymer may have a melt index (I₂) of from 0.5 to 30.0 g/10 min, from 0.5 to 12 g/10 min, from 0.5 g/10 min to 5.0 g/10 min, or from 3.0 g/10 min to 7.0 g/10 min.

In various embodiments, the ethylene/alpha-olefin block copolymer has a density of 0.850 g/cc to 0.890 g/cc. All individual values and subranges from 0.850 g/cc to 0.890 g/cc are included herein and disclosed herein; for example, the density of the ethylene/alpha-olefin block copolymer can be from a lower limit of 0.850 g/cc, 0.855 g/cc, 0.860 g/cc, 0.865 g/cc, or 0.870 g/cc to an upper limit of 0.890 g/cc, 0.885 g/cc, 0.880 g/cc, or 0.875 g/cc. In embodiments, the ethylene/alpha-olefin block copolymer has a density of from 0.860 g/cc to 0.890 g/cc.

The ethylene/alpha-olefin block copolymer has a melt temperature (Tₘ) (DSC) of from 115 °C to 125 °C. All individual values and subranges from 115 °C to 125 °C are included herein and disclosed herein; for example, the melting point of the ethylene/alpha-olefin block copolymer can be from a lower limit of 115 °C, 116 °C, 117 °C, 118 °C, 119 °C, or 120 °C to an upper limit of 125 °C, 124 °C, 123 °C, 122 °C, or 121 °C.

In some embodiments, the ethylene/alpha-olefin block copolymer has a molecular weight distribution (MWD) of 3.5 or less. Molecular weight distribution (MWD) is defined as weight average molecular weight (Mw) divided by number average molecular weight (Mn). For example, the ethylene/alpha-olefin block copolymer of some embodiments has a MWD of from 2 to 3. Techniques for determining molecular weight (Mn and Mw) and MWD may be found in U.S. Patent No. 4,540,753.

The ethylene/alpha-olefin block copolymer can be formed utilizing known polymerization processes, such as those described in PCT Application No. PCT/US2005/008915, PCT Application No. PCT/US2005/008916, and PCT Application No. PCT/US2005/008917.

Additionally or alternatively, various embodiments include an ethylene/alpha-olefin copolymer, such as homogeneously branched ethylene/alpha-olefin copolymers. These copolymers can be made with single-site catalysts such as metallocene catalysts or constrained geometry catalysts, and typically have a melting point of less than 105 °C, less than 90 °C, less than 85 °C, less than 80 °C, or less than 75 °C. The melting point is measured by differential scanning calorimetry (DSC) as described, for example, in U.S. Patent No. 5,783,638. The alpha-olefin, in embodiments, is a C₃-C₂₀ linear, branched, or cyclic alpha-olefin, as described above.

Illustrative homogeneously branched ethylene/alpha-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, and ethylene/butene/styrene. The copolymers can be random copolymers.

In various embodiments, the ethylene/alpha-olefin copolymer has a melt index (I₂) of from about 0.5 to about 30.0 g/10 min, as determined in accordance with ASTM D1238 (190 °C; 2.16 kg). For example, the ethylene/alpha-olefin copolymer may have a melt index (I₂) of from 0.5 to 30.0 g/10 min, from 0.5 to 12 g/10 min, from 0.5 g/10 min to 5.0 g/10 min, or from 3.0 g/10 min to 7.0 g/10 min.

In various embodiments, the ethylene/alpha-olefin copolymer has a density of 0.840 g/cc to 0.910 g/cc. All individual values and subranges from 0.840 g/cc to 0.910 g/cc are included herein and disclosed herein; for example, the density of the ethylene/alpha-olefin copolymer can be from a lower limit of 0.840 g/cc, 0.845 g/cc, 0.850 g/cc, 0.855 g/cc, 0.860 g/cc, 0.865 g/cc, or 0.870 g/cc to an upper limit of 0.910 g/cc, 0.905 g/cc, 0.900 g/cc, 0.895 g/cc, 0.890 g/cc, 0.885 g/cc, 0.880 g/cc, or 0.875 g/cc. In embodiments, the ethylene/alpha-olefin copolymer has a density of from 0.860 g/cc to 0.900 g/cc or from 0.860 g/cc to 0.890 g/cc.

Examples of commercially available homogenously branched ethylene/alpha-olefin copolymers include homogeneously branched, linear ethylene/alpha-olefin copolymers (e.g., those available under the trade names TAFMER^{™} from Mitsui and EXACT^{™} from The Exxon Mobil Chemical Company), and homogeneously branched, substantially linear ethylene/alpha-olefin polymers (e.g., those available under the trade names AFFINITY^{™} and ENGAGE^{™} polyethylene from The Dow Chemical Company, Midland, MI).

In various embodiments, the composition further includes from 30 wt.% to 50 wt.% of an E/X/Y/Z epoxy-containing ethylene interpolymer, based on the total weight of the composition, where E is an ethylene monomer, X is an (meth)acrylate, alkyl (meth)acrylate, or vinyl acetate, Y is glycidyl methacrylate (GMA), and Z is a copolymer unit derived from comonomers selected from the group consisting of carbon monoxide, sulfur dioxide, and acrylonitrile and comprises from 0 to 10 wt.% of the interpolymer. As used herein, "epoxy-containing ethylene interpolymer" means a first embodiment wherein the epoxy composition may be copolymerized with the ethylene into the interpolymer backbone, for example, through an epoxy containing monomer like GMA. Additionally, "epoxy-containing ethylene interpolymer" may encompass a second embodiment wherein the epoxy is grafted onto the interpolymer backbone. Moreover, the "epoxy-containing ethylene interpolymer" could encompass a combination of the first and second embodiments.

The ethylene can be present in an amount of greater than 50 wt.%, based on the total weight of polymerizable monomers. For example, the epoxy-containing ethylene interpolymer can include from 50 wt.% to 99.5 wt.% ethylene, from 55 wt.% to 94 wt.% ethylene, from 60 wt.% to 90 wt.% ethylene, or from 65 wt.% to 85 wt.% ethylene. All individual values and subranges from 50 wt.% to 99.5 wt.% are included.

In embodiments, the X component can be present in an amount of from 0 wt.% to 40 wt.%, based on the total weight of polymerizable monomers. For example, the X component may be present in an amount from 1 wt.% to 40 wt.%, from 12 wt.% to 32 wt.%, or from 13 wt.% to 31 wt.%, based on the total weight of polymerizable monomers. All individual values and subranges from 0 wt.% to 40 wt.% are included. In embodiments, X may be a copolymer unit-(CH₂CR¹R²)-. In some embodiments, R¹ may be hydrogen, methyl, or ethyl. In some embodiments, R² is carboalkoxy, acyloxy, or alkoxy of 1 to 10 carbon atoms. As described above, in various embodiments, X is an (meth)acrylate, alkyl (meth)acrylate, or vinyl acetate. Suitable acrylate comonomers include methyl acrylate (MA), ethyl acrylate (EA), and butyl acrylate (BA).

In embodiments, Y may be a copolymer unit -(CH₂CR³R⁴)-. In some embodiments, R³ may be hydrogen or methyl. In some embodiments, R⁴ may be carboglycidoxy or glycidoxy. In some embodiments, Y may be selected from the group consisting of glycidyl acrylate, glycidyl methacrylate, glycidyl butyl acrylate, glycidyl vinyl ether, and combinations of two or more of glycidyl acrylate, glycidyl methacrylate, glycidyl butyl acrylate, and glycidyl vinyl ether. The epoxy-containing ethylene interpolymer of various embodiments includes from 0.5 wt.% to 13 wt.%, or from 5 wt.% to 10 wt.% of glycidyl methacrylate (GMA), based on the total weight of polymerizable monomers. Without being bound by theory, it is believed that the epoxy monomer present in the GMA cross-links with the azo group of the blowing agent or an ammonia decomposition product of the blowing agent to yield the cross-linked foam, which is resistant to foaming expansion. Additionally, it is believed that the cross-linking between the GMA and the azo or ammonia group enables the strong cross-linked foam to be achieved without the need for a peroxide crosslinker.

In embodiments, Z may be a copolymer unit derived from comonomers including carbon monoxide, sulfur dioxide, acrylonitrile, or other monomers. In further embodiments, the epoxyfunctionalized ethylene copolymer may include from about 0 wt.% to about 10 wt.% Z, from about 0 wt.% to about 8 wt.% Z, from about 0 wt.% to about 6 wt.% Z, from about 0 wt.% to about 4 wt.% Z, from about 0 wt. % to about 2 wt.% Z, from about 2 wt.% to about 10 wt.% Z, from about 2 wt.% to about 8 wt.% Z, from about 2 wt.% to about 6 wt.% Z, from about 2 wt.% to about 4 wt.% Z, from about 4 wt.% to about 10 wt.% Z, from about 4 wt.% to about 8 wt.% Z, from about 4 wt.% to about 6 wt.% Z, from about 6 wt.% to about 10 wt.% Z, from about 6 wt. % to about 8 wt.% Z, or from about 8 wt.% to about 10 wt.% Z, based on the total weight of polymerizable monomers.

It is contemplated that some embodiments include 0 wt.% of Z. In such embodiments, the epoxy-containing ethylene interpolymer may be referred to as an E/X/Y epoxy-containing ethylene interpolymer.

The epoxy-containing ethylene interpolymer may have a melt index (I₂) of from 4 to 20 g/10 min, from 4 to 15 g/10 min, from 4 to 12 g/10 min, or from 5 to 10 g/10 min, as determined in accordance with ASTM D1238 (190 °C; 2.16 kg). Examples of commercially available copolymer resins which may be used in some embodiments include those available under the trade name ELVALOY^{™} available from The Dow Chemical Company (Midland, MI).

According to various embodiments, the composition further includes a chemical blowing agent to generate porosity to form the foam upon heating. The chemical blowing agent may comprise a nitrogen containing composition, which may crosslink with the epoxy group of the epoxy-containing ethylene interpolymer. In general, the amount of blowing agent is an amount effective to produce a fairly uniform cell size in the foam. In various embodiments, the blowing agent is present in an amount of from 0.1 wt.% to 30 wt.%, from 0.5 wt.% to 5 wt.%, or from 1 wt.% to 3 wt.%, based on the total weight of the composition. In various embodiments, the blowing agent is a chemical blowing agent which decomposes to liberate gases (e.g., azo compounds or other nitrogen-containing compounds, such as ammonia) during the blowing process to form a foam. The one or more azo compounds or other nitrogen-containing compounds that are liberated by the chemical blowing agent react with the GMA of the epoxy-containing ethylene interpolymer to produce a cross-linked epoxy-containing ethylene interpolymer. As described above and below, this cross-linking enables the production of a strong foam with resistance to expansion without the use of a peroxide crosslinker.

Chemical blowing agents include azobisisobutyronitrile (AIBN), azodicarbonamide, dinitroso-pentamethylene-tetramine, p-toluene sulfonyl hydrazide, p,p'-oxy-bis(benzenesulfonyl hydrazide), and combinations thereof. An exemplary azo compound is azodicarbonamide. Commercially available chemical blowing agents suitable for use include Azodicarbonamide AC3000, available from Haihong Chemical. In order to tailor expansion-decomposition temperature and foaming processes, a blowing agent may also be a mixture of blowing agents or of blowing agents and an activator.

In various embodiments, the composition used to produce the foam includes from 0.05 wt.% to 5 wt.%, from 0.1 wt.% to 1 wt.%, or from 0.2 wt.% to 0.4 wt.% of an activator, based on the total weight of the composition. The activator lowers the decomposition temperature/profile of the blowing agents. In various embodiments, the activator is a metal stearic acid salt, such as zinc stearate. In embodiments, the activator is one or more metal oxides, metal salts, or organometallic complexes, or a combination thereof. Examples of suitable activators include zinc oxide, magnesium oxide, zinc stearate, calcium stearate, iron stearate, or combinations thereof. Other examples of suitable activators include imidazole, tertiary amines, Lewis acids, boron trifluoride, and other well-known catalysts suitable for use in epoxy-amine curing processes. Without being bound by theory, it is believed that the activator helps to regulate the temperature at which the blowing agent is activated to generate the gas(es) that foams the composition to the desired thickness and/or density reduction.

In various embodiments, the composition comprises less than 0.05 wt.% of a curing agent, based on the total weight of the composition. Curing agents include one or more organic peroxides including dialkyl peroxides, peroxy esters, peroxy dicarbonates, peroxy ketals, diacyl peroxides, or combinations of two or more thereof. Examples of peroxides include dicumyl peroxide, di(3,3,5-trimethyl hexanoyl)peroxide, t-butyl peroxypivalate, t-butyl peroxyneodecanoate, di(§-butyl)peroxydicarbonate, t-amyl peroxyneodecanoate, 1,1-di-t-butyl peroxy-3,3,5-trimethylcyclohexane, t-butyl-cumyl peroxide, 2,5-dimethyl-2,5-di(tertiary-butylperoxyl)hexane, 1,3-bis(tertiary-butyl-peroxyl-isopropyl)benzene, or a combination thereof. Commercially available curing agents include those available under the trade names LUPEROX^{®} from Arkema or TRIGONOX^{®} from Akzo Nobel. However, in other embodiments, the composition is free of peroxides.

In various embodiments, the composition may optionally include a mineral oil, such as paraffinic, naphthenic, and other hydrocarbon or synthetic oils. Such oils can be present in an amount of from 0 wt.% to 40 wt.%, from 0 wt.% to 30 wt.%, from 0 wt.% to 20 wt.%, from 0.05 wt.% to 40 wt.%, from 0.05 wt.% to 30 wt.%, or from 0.05 wt.% to 20 wt.%, based on the total weight of the composition. When included, the oils can be used to adjust the softness of the final product, such as the artificial leather including the foam.

Other additives, which can be present in the composition from 0 wt.% to 30 wt.%, from 0.1 wt.% to 20 wt.%, or from 0.1 wt.% to 12 wt.%, based on the total weight of the composition, may include pigments (TiOz and other compatible colored pigments), fillers (e.g., talc, calcium carbonate, barium sulfate, and/or silicon oxide), stabilizers (e.g., antioxidants, UV absorbers, and/or flame retardants), and processing aids (e.g., calcium stearate and/or barium stearate). Antioxidants can include those available under the trade name IRGANOX^{™}, such as IRGANOX^{™} 1010 and IRGANOX^{™} 3114 from BASF. UV absorbers can include those available under the trade name TINUVIN^{™}, such as TINUVIN^{™} 622 from BASF.

In various embodiments, foams are formed from the compositions by mixing the polymers with heat sufficient to melt the polymers, and adding the remaining ingredients, including the activator, blowing agent, and any additives to form a homogenous mixture. The mixture is then heated to a temperature sufficient to produce foaming.

In various embodiments, the resultant foam has uniform closed foam cells and little or even no coalescence/collapse, high foaming efficiency (e.g., foam expansion ratio achieves greater than 700% when foaming at 230 °C for 50 seconds), a foaming window from 30 seconds to 200 seconds at 210 °C to 230 °C, and excellent foam resilience.

According to various embodiments, the foam has a cell size that is less than about 400 µm. For example, in embodiments, the foam has a cell size of greater than or equal to 100 µm and less than or equal to 400 µm. However, other cell sizes, including cell sized larger than 400 µm are contemplated, depending on the particular application in which the foam is to be employed. Accordingly, in some embodiments, the foam may have a microcellular structure with cells smaller than 100 µm. In some embodiments, the foam may have a nanocellular structure with cells smaller than 1 µm.

In various embodiments, the foam is used to make an artificial leather. The artificial leather may be unsupported (e.g., no additional backing, i.e., for skin applications) or supported by its application to a base layer, such as a fabric (i.e., for upholster-type applications), and may be formed via a calendering process or other process known and used in the art. Suitable fabrics can be woven, non-woven, knitted, twilled, sweating, or the like. In various embodiments, the foam composition is applied to a polymeric layer by any suitable method, such as by spray coating, to a desired thickness and/or density, and heating is applied thereto. The blowing agent in the foam composition, when activated, generates a gas or mixture of gasses which will induce foaming to produce a foam layer including a cellular structure.

The artificial leathers thus obtained have excellent touch, appearance, and full-hand similar to that of natural leather and further have excellent softness and surface strength. The artificial leathers of various embodiments are useful as skins or covers in the automobile fields, including interior skin or cover materials of, for example, seats, instrument panels, console boxes, arm rests, head rests, door trims, rear panels, pillar trims, sunvisors, head liners, and steering wheel covers; in the sporting goods fields for, for example, ball covers, sport shoe uppers, racket grips, sport tools and goods, covering materials of saddles and handlebar grips of bicycles, motorcycles, and tricycles; in the housing and building fields as, for example, covering materials for upholstery for furniture, wall decorative materials, table cloths, placemats, and coasters; in the industrial parts field for grips and hoses for electric tools; and in other fields, such as for covering materials of bags, briefcases, handbags, clothes, files, albums, toys, and molded articles.

### Examples

The following examples are provided to illustrate various embodiments, but are not intended to limit the scope of the claims. All parts and percentages are by weight unless otherwise indicated. Approximate properties, characters, parameters, etc., are provided below with respect to various working examples, comparative examples, and the materials used in the working and comparative examples. Further, a description of the raw materials used in the examples is as follows:
ENGAGE^{™} 8200 is a homogeneously branched, substantially linear ethylene/alpha-olefin polymer having a density of 0.87 g/cc as measured in accordance with ASTM D792, a melt index (I₂) of 5.0 g/10 min as measured in accordance with ASTM D1238 at 190 °C/2.16 kg, and a Shore A hardness of 66 as measured in accordance with ASTM D2240, 10s, available from The Dow Chemical Company (Midland, MI);
DE 2400.05 is a propylene/ethylene copolymer having a density of 0.866 g/cc as measured in accordance with ASTM D792 and a melt flow rate (MFR) of 2 g/10 min as measured in accordance with ASTM D1238-03 at 230 °C/2.16 kg, available from The Dow Chemical Company (Midland, MI);
INFUSE^{™} 9507 is an olefin block copolymer (OBC) having a density of 0.866 g/cc as measured in accordance with ASTM D792 and a melt index (I₂) of 5.0 g/10 min as measured in accordance with ASTM D1238 at 190 °C/2.16 kg, available from The Dow Chemical Company (Midland, MI);
E/X/Y/Z-1 is an E/X/Y/Z epoxy-containing interpolymer having an nBA content of 21 wt.% and a GMA content of 9 wt.%, a melt index (I₂) of 8.0 g/10 min, as measured in accordance with ASTM D1238 at 190 °C/2.16 kg;
AC 3000 is an azodicarbonamide blowing agent available from Haihong Chemical;
Talc is SQ-1250 talc available from HaiCheng Shuiquan Mineral Products Co., Ltd (Liaoning, China) with a 1250 mesh diameter;
IRGANOX^{™} 168 and IRGANOX^{™} 1010 are antioxidants available from BASF; and
TINUVIN^{™} 622 is a UV stabilizer available from BASF.

Nine foaming compositions, Comparative Examples A-E and Examples 1-4, were prepared according to the formulations (provided in wt.%) in Table 1 below.

**Table 1:**

| **Table 1: Foaming Compositions** | | | | | | | | | |
|---|---|---|---|---|---|---|---|---|---|
| | **Comp. Ex. A** | **Comp. Ex. B** | **Comp. Ex. C** | **Comp. Ex. D** | **Comp. Ex. E** | **Ex. 1** | **Ex. 2** | **Ex. 3** | **Ex. 4** |
| DE 2400.05 | 92.59 | - | - | - | - | - | - | - | - |
| ENGAGE^{™} 8200 | - | 92.59 | - | 64.81 | - | 55.56 | 46.30 | - | - |
| INFUSE^{™} 9507 | - | - | 92.59 | - | 64.81 | - | - | 55.56 | 46.30 |
| E/X/Y/Z-1 | - | - | - | 27.78 | 27.78 | 37.04 | 46.30 | 37.04 | 46.30 |
| AC 3000 | 1.85 | 1.85 | 1.85 | 1.85 | 1.85 | 1.85 | 1.85 | 1.85 | 1.85 |
| Talc | 4.63 | 4.63 | 4.63 | 4.63 | 4.63 | 4.63 | 4.63 | 4.63 | 4.63 |
| ZnSt | 0.37 | 0.37 | 0.37 | 0.37 | 0.37 | 0.37 | 0.37 | 0.37 | 0.37 |
| IRAGNOX^{™} 168 | 0.19 | 0.19 | 0.19 | 0.19 | 0.19 | 0.19 | 0.19 | 0.19 | 0.19 |
| IRGANOX^{™} 1010 | 0.19 | 0.19 | 0.19 | 0.19 | 0.19 | 0.19 | 0.19 | 0.19 | 0.19 |
| TINUVIN^{™} 622 | 0.19 | 0.19 | 0.19 | 0.19 | 0.19 | 0.19 | 0.19 | 0.19 | 0.19 |

Comparative Examples A-E and Examples 1-4 were prepared by adding the polymer(s) (DE 2400.05, ENGAGE^{™} 8200, INFUSE^{™} 9507, and/or E/X/Y/Z-1) into a 350 mL mixing bowl of a Brabender mixer and mixing at a temperature of 150 °C. After the polymer(s) were fully melted, the remaining ingredients were added into the bowl and mixed for another 5 minutes. The mixed composition was further compression molded at 150 °C into a sheet with a thickness of 0.5 mm for use in the foaming test.

To measure the foaming performance, the oven temperature was set to 210 °C, and 30*30 mm² test specimens were cut from the compression molded sheet. Each test specimen was supported by a release paper. Specimens were put into the oven by quickly opening the door, inserting the specimens into the oven, and closing the door of the oven immediately. A timer was started and the specimens were removed from the oven after 180 seconds.

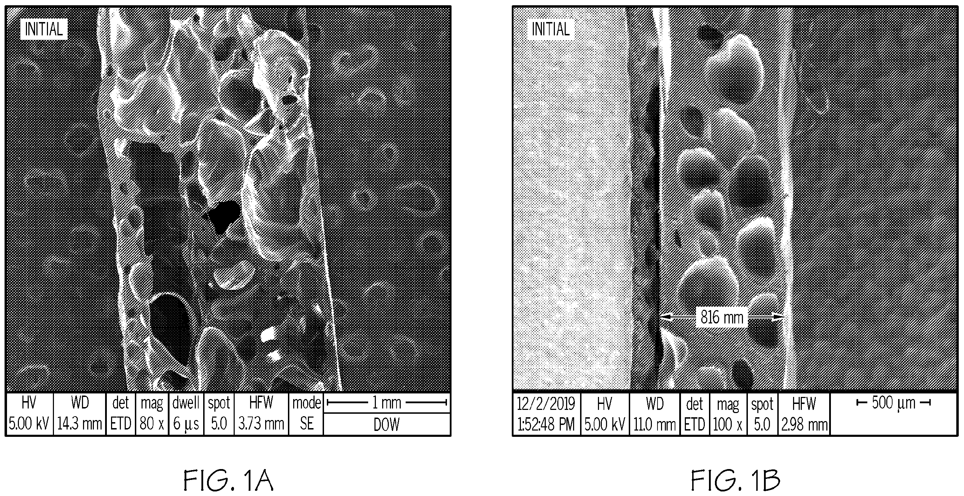

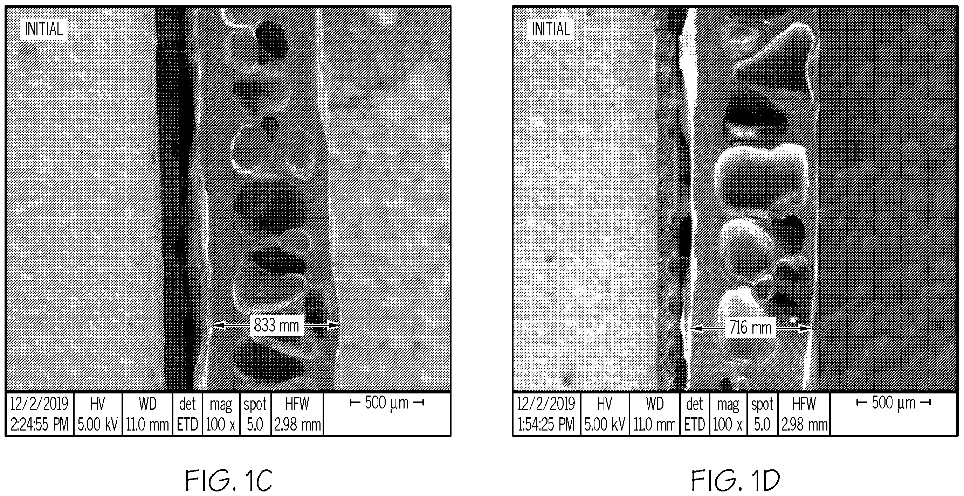

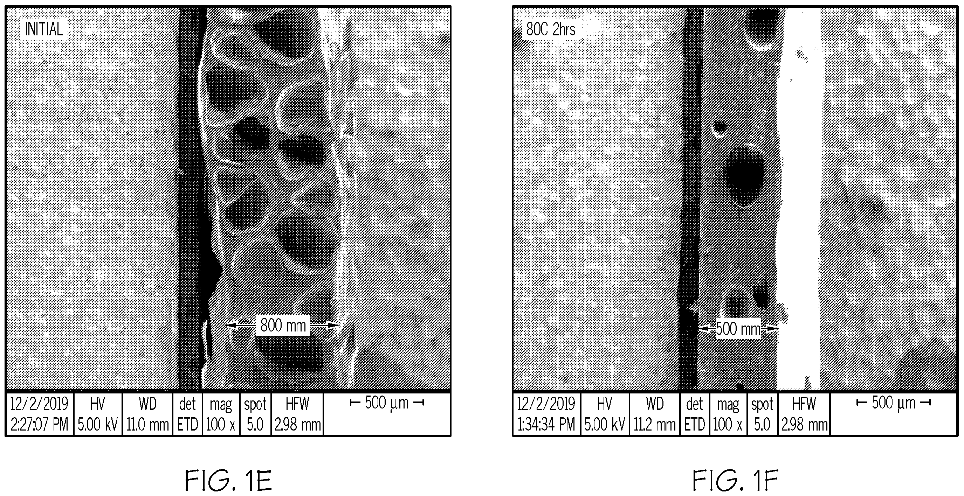

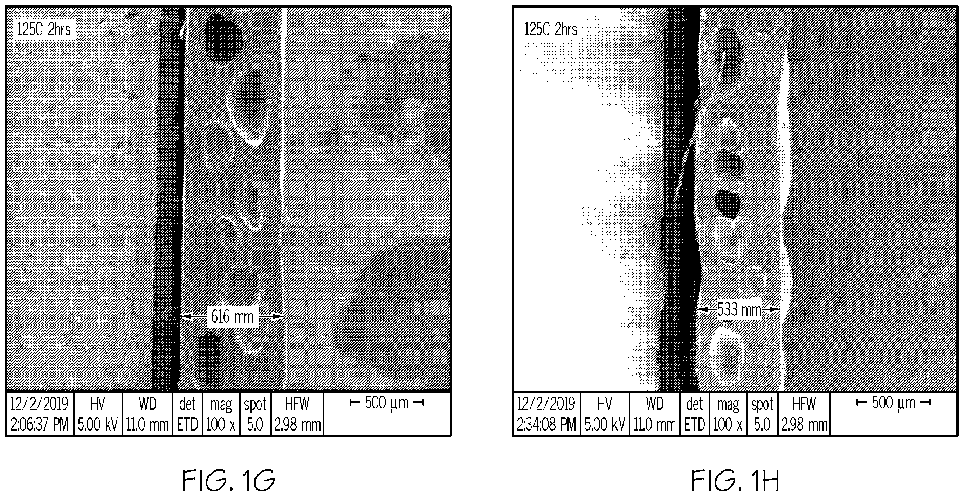

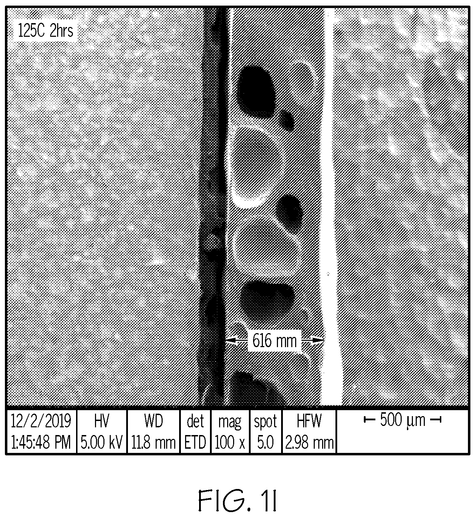

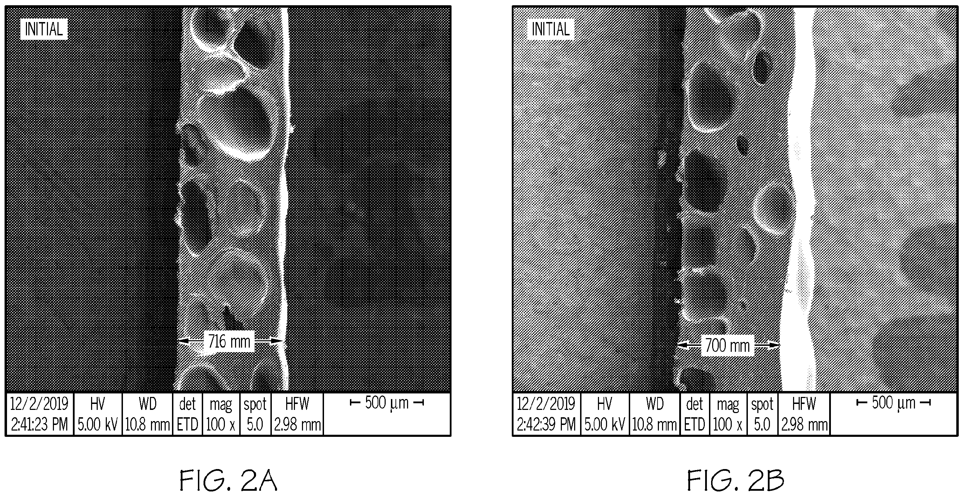

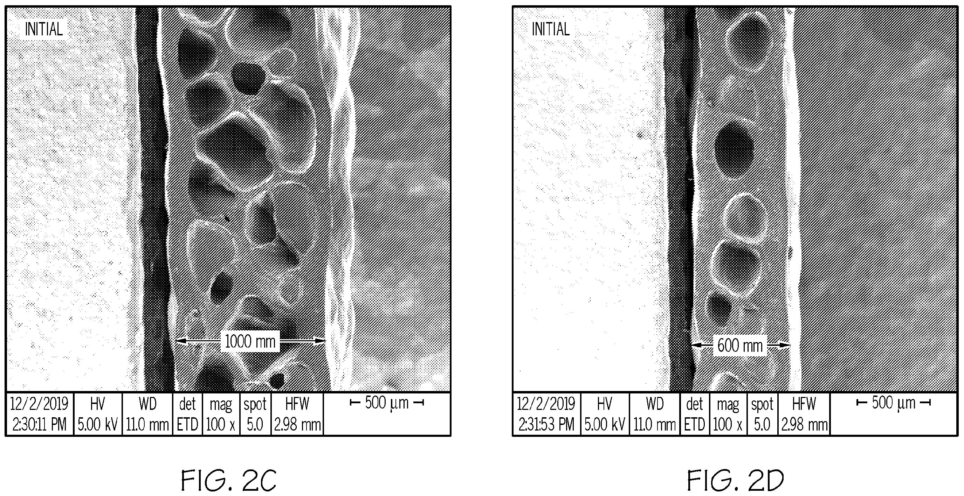

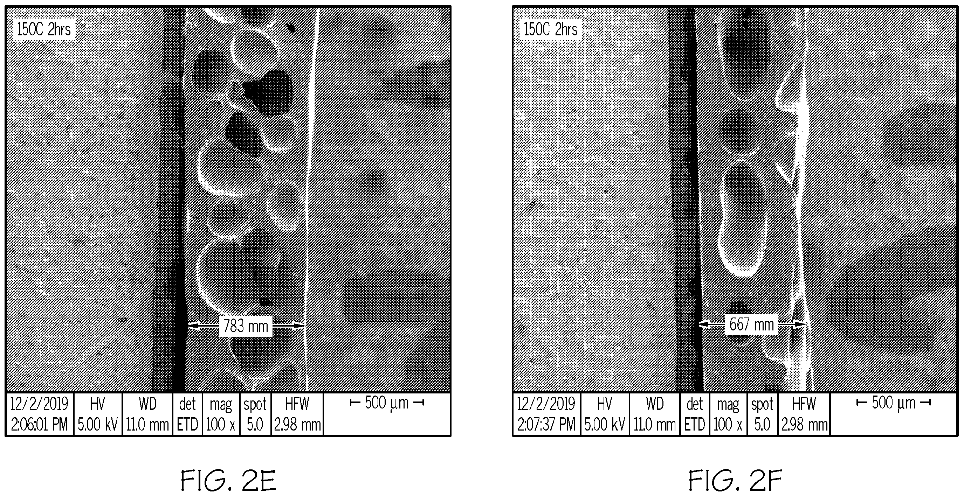

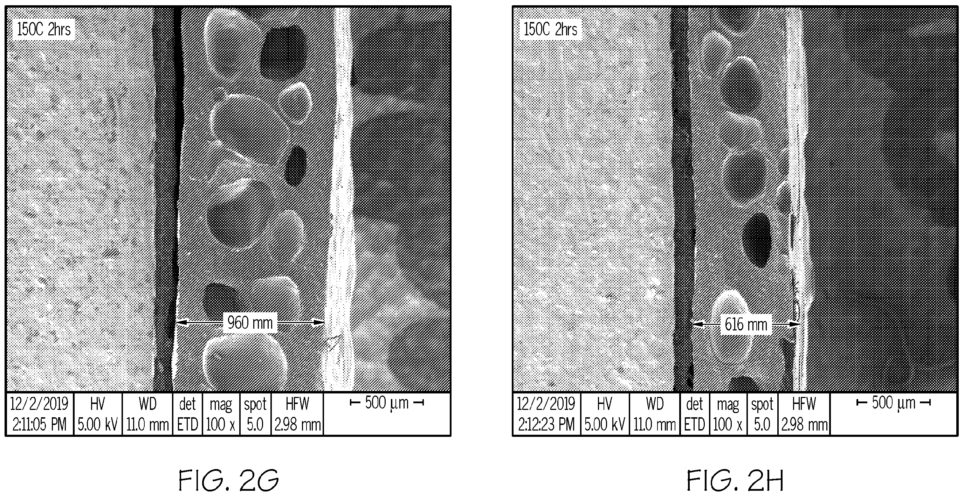

Foam cells for each of the test specimens were characterized after foaming and before the samples were subjected to aging. To characterize the foam cells, samples were cut out with a razor blade, mounted on a sample holder and coated with Ir using an Emitech K575X coater. The current was set to 20 mA and the coating time was set to 60 sec. The coated samples were imaged in a Nova 630 SEM, and sample's morphology was examined with a Nova Nano 630 SEM using ETD detector at an accelerating voltage of 5 KV, a spot size of 12.7 cm (5") and a working distance of about 12 mm. Thickness of the foam and average foam cell size prior to aging are reported in Table 2 as "initial" values. Images from the SEM after foaming are shown in FIGS. 1A-1E (Comparative Examples A-E, respectively) and FIGS. 2A-2D (Examples 1-4, respectively).

**Table 2:**

| | **Comp. Ex. A** | **Comp. Ex. B** | **Comp. Ex. C** | **Comp. Ex. D** | **Comp. Ex. E** | **Ex. 1** | **Ex. 2** | **Ex. 3** | **Ex. 4** |
|---|---|---|---|---|---|---|---|---|---|
| **Initial** | | | | | | | | | |
| Thickness (mm) | Foam cell collapsed | 816 | 833 | 716 | 800 | 716 | 700 | 1000 | 600 |
| Average foam cell size (mm) | | 277 | 359 | 330 | 339 | 369 | 299 | 349 | 295 |

| **Aged at 80 °C for 2 hours** | | | | | | | | | |
|---|---|---|---|---|---|---|---|---|---|
| Thickness (mm) | n/a | 500 | n/a | n/a | n/a | n/a | n/a | n/a | n/a |
| Average foam cell size (mm) | n/a | 317 | n/a | n/a | n/a | n/a | n/a | n/a | n/a |

| **Aged at 125 °C for 2 hours** | | | | | | | | | |
|---|---|---|---|---|---|---|---|---|---|
| Thickness (mm) | n/a | n/a | 616 | 533 | 616 | n/a | n/a | n/a | n/a |
| Average foam cell size (mm) | n/a | n/a | 305 | 223 | 332 | n/a | n/a | n/a | n/a |

| **Aged at 150 °C for 2 hours** | | | | | | | | | |
|---|---|---|---|---|---|---|---|---|---|
| Thickness (mm) | n/a | n/a | n/a | n/a | n/a | 783 | 667 | 960 | 616 |
| Average foam cell size (mm) | n/a | n/a | n/a | n/a | n/a | 354 | 322 | 366 | 344 |

Samples from Comparatives Example B-E and Examples 1-4 were then put into the oven at various temperatures for 2 hours to test the heat resistance. In particular, heat resistance was tested at 80 °C, 125 °C, and 150 °C, and the foam cells were characterized again according to the method described above. The results are reported in Table 2. Images from the SEM after aging are shown in FIGS. 1F-1I (Comparative Examples B-E, respectively) and in FIGS. 2E-2H (Examples 1-4, respectively).

As shown in Table 2 and FIG. 1A, Comparative Example A, which included a propylene/ethylene copolymer without an E/X/Y/Z epoxy-containing ethylene interpolymer, did not foam well and the foam cells collapsed.

Comparative Example B included a homogeneously branched, substantially linear ethylene/alpha-olefin polymer without an E/X/Y/Z epoxy-containing ethylene interpolymer. After aging for 2 hours at 80 °C, the foam cells originally present (FIG. 1B) disappeared, as shown in FIG. 1F, and clear shrinkage of the thickness was observed (from 816 mm to 500 mm). Without being bound by theory, it is believed that this is because the aging temperature (80 °C) is above the melting point of the polymer (approximately 60 °C), and the polymer melted during the aging process.

Comparative Examples C, D, and E were aged for 2 hours at 125 °C. As shown in FIGS. 1G (Comparative Example C), 1H (Comparative Example D), and Comparative Example 1I (Comparative Example E), the foam cells that originally appeared in FIGS. 1C (Comparative Example C), 1D (Comparative Example D), and 1E (Comparative Example E) disappeared. Shrinkage of the thickness of these foams was also observed. As with the Comparative Example A, it is believed that this is because the aging temperature (125 °C) was greater than the melting point of the INFUSE^{™} OBC (120 °C) that made up the polymer in Comparative Example C and the majority of the polymer in Comparative Example E. Comparative Example D included the homogeneously branched, substantially linear ethylene/alpha-olefin polymer of Comparative Example A as a major component. Both Comparative Examples D and E included minor amounts of the E/X/Y/Z epoxy-containing ethylene interpolymer, but it was not present in amounts great enough to prevent the collapse of the foam cells.

However, Examples 1-4 included the E/X/Y/Z epoxy-containing ethylene interpolymer at higher loading (35% and 50%), and demonstrated good retention of the foam thickness and foam cell structure, indicating improved heat resistance of the formulation. The maintained foam cell structure after aging at 150 °C for 2 hours can be seen by comparing FIGS. 2E (Example 1), 2F (Example 2), 2G (Example 3), and 2H (Example 4) with the SEM images of the initial foam cell structures in FIGS. 2A (Example 1), 2B (Example 2), 2C (Example 3), and 2D (Example 4), respectively.

Accordingly, various embodiments herein provide a cross-linked foam that exhibits improved heat resistance, particularly over 150 °C. The cross-linked foam of various embodiments includes an ethylene/alpha-olefin copolymer, a reactive epoxy group functionalized interpolymer, a chemical blowing agent (such as an AZO blowing agent), and an activator. In particular, the epoxy-containing ethylene interpolymer is a cross-linked epoxy-containing ethylene interpolymer produced by the reaction of the glycidyl methacrylate in the interpolymer and azo or nitrogen-containing group formed from decomposition of the blowing agent. Without being limited by the theory, the crosslinking of the foam provides improved stability by resisting foam collapse at higher temperatures.

It is further noted that terms like "generally," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present disclosure.

## Claims

1. A foam formed from a composition, wherein the composition comprises:
at least 50 wt.%, based on the composition, of an ethylene/alpha-olefin copolymer having a density of from 0.840 g/cc to 0.910 g/cc and a melt index (I₂) from 0.5 to 12.0 g/ 10 min, an olefin block copolymer having a density of from 0.860 g/cc to 0.890 g/cc and a melt index (I₂) from 0.5 to 12.0 g/ 10 min, or a blend thereof;
from 30 wt.% to 50 wt.%, based on the composition, an E/X/Y/Z epoxy-containing ethylene interpolymer, wherein E is an ethylene monomer and comprises greater than 50 wt.% of the interpolymer, X is an (meth)acrylate, alkyl (meth)acrylate, or vinyl acetate and comprises from 0 to 40 wt.% of the interpolymer, Y is glycidyl methacrylate and comprises 0.5 to 13 wt.% of the interpolymer, and Z is a copolymer unit derived from comonomers selected from the group consisting of carbon monoxide, sulfur dioxide, and acrylonitrile and comprises from 0 to 10 wt.% of the interpolymer, wherein the wt.% is based on the total amount of polymerizable monomers;
from 0.5 to 5 wt.%, based on the composition, of a chemical blowing agent;
from 0.1 to 1 wt.%, based on the composition, of an activator; and
less than 0.05 wt.%, based on the composition, of a curing agent.

2. The foam according to claim 1, wherein X comprises from 1 to 40 wt.% of the interpolymer.

3. The foam according to any preceding claim, wherein the chemical blowing agent decomposes to liberate one or more azo or nitrogen-containing compounds.

4. The foam according to claim 3, wherein the epoxy-containing ethylene interpolymer is a cross-linked epoxy-containing ethylene interpolymer produced by reaction of the glycidyl methacrylate and the one or more azo or nitrogen-containing compounds liberated by the chemical blowing agent.

5. The foam according to any preceding claim, wherein the chemical blowing agent is azodicarbonamide.

6. The foam according to any preceding claim, wherein the activator is a metal stearic acid salt.

7. The foam according to claim 6, wherein the metal stearic acid salt is zinc stearate.

8. The foam according to any preceding claim, wherein the ethylene/alpha-olefin copolymer, the olefin block copolymer, or both are copolymers of ethylene and a C₄-C₈ alpha-olefin comonomer.

9. The foam according to claim 8, wherein the C₄-C₈ alpha-olefin comonomer is octene.

10. The foam according to any preceding claim, wherein the ethylene/alpha-olefin copolymer, the olefin block copolymer, or both has a density of from 0.860 g/cc to 0.890 g/cc.

11. The foam according to any preceding claim, wherein the ethylene/alpha-olefin copolymer, the olefin block copolymer, or both has a melt index (I₂) of from 3.0 g/10 min to 7.0 g/10 min.

12. The foam according to any preceding claim, wherein the composition is free of peroxides.

13. The foam according to any preceding claim, wherein the composition further comprises at least one mineral oil.

14. An artificial leather comprising two or more layers, wherein one layer is the foam of any preceding claim.

## Patentansprüche

1. Schaum, der aus einer Zusammensetzung ausgebildet ist, wobei die Zusammensetzung umfasst:
mindestens zu 50 Gew.-%, bezogen auf die Zusammensetzung, ein Ethylen/Alpha-Olefincopolymer, das eine Dichte von 0,840 g/cm³ bis 0,910 g/cm³ und einen Schmelzindex (I₂) von 0,5 bis 12,0 g/10 min aufweist, ein Olefinblockcopolymer, das eine Dichte von 0,860 g/cm³ bis 0,890 g/cm³ und einen Schmelzindex (I₂) von 0,5 bis 12,0 g/10 min aufweist, oder eine Mischung davon;
von zu 30 Gew.-% bis 50 Gew.-%, bezogen auf die Zusammensetzung, ein E/X/Y/Z-epoxidhaltiges Ethylenzwischenpolymer, wobei E ein Ethylenmonomer ist und mehr als 50 Gew.-% des Zwischenpolymers umfasst, X ein (Meth)acrylat, Alkyl(meth)acrylat oder Vinylacetat ist und von zu 0 bis 40 Gew.-% das Zwischenpolymer umfasst, Y Glycidylmethacrylat ist und zu 0,5 bis 13 Gew.-% das Zwischenpolymer umfasst, und Z eine Copolymereinheit ist, die von Comonomeren abgeleitet ist, die aus der Gruppe ausgewählt sind, bestehend aus Kohlenmonoxid, Schwefeldioxid und Acrylnitril, und von zu 0 bis 10 Gew.-% das Zwischenpolymer umfasst, wobei die Gew.-% auf die Gesamtmenge von polymerisierbaren Monomeren bezogen sind;
von 0,5 bis 5 Gew.-% auf die Zusammensetzung, eines chemischen Treibmittels bezogen sind;
von 0,1 bis 1 Gew.-% auf die Zusammensetzung, eines Aktivators bezogen sind; und
weniger als 0,05 Gew.-% auf die Zusammensetzung, eines Härtungsmittels bezogen sind.

2. Schaum nach Anspruch 1, wobei X von zu 1 bis 40 Gew.-% das Zwischenpolymer umfasst.

3. Schaum nach einem der vorstehenden Ansprüche, wobei das chemische Treibmittel zerfällt, um eine oder mehrere azo- oder stickstoffhaltige Verbindungen freizusetzen.

4. Schaum nach Anspruch 3, wobei das epoxidhaltige Ethylenzwischenpolymer ein vernetztes epoxidhaltiges Ethylenzwischenpolymer ist, das durch Reaktion des Glycidylmethacrylats und der einen oder mehreren azooder stickstoffhaltigen Verbindungen, die durch das chemische Treibmittel freigesetzt werden, hergestellt wird.

5. Schaum nach einem der vorstehenden Ansprüche, wobei das chemische Treibmittel Azodicarbonamid ist.

6. Schaum nach einem der vorstehenden Ansprüche, wobei der Aktivator ein Metallstearinsäuresalz ist.

7. Schaum nach Anspruch 6, wobei das Metallstearinsäuresalz Zinkstearat ist.

8. Schaum nach einem der vorstehenden Ansprüche, wobei das Ethylen/Alpha-Olefincopolymer, das Olefinblockcopolymer oder beide Copolymere aus Ethylen und einem C₄-C₈-Alpha-Olefincomonomer sind.

9. Schaum nach Anspruch 8, wobei das C₄-C₈-Alpha-Olefincomonomer Octen ist.

10. Schaum nach einem der vorstehenden Ansprüche, wobei das Ethylen/Alpha-Olefincopolymer, das Olefinblockcopolymer oder beide eine Dichte von 0,860 g/cm³ bis 0,890 g/cm³ aufweisen.

11. Schaum nach einem der vorstehenden Ansprüche, wobei das Ethylen/Alpha-Olefincopolymer, das Olefinblockcopolymer oder beide einen Schmelzindex (I₂) von 3,0 g/10 min bis 7,0 g/10 min aufweisen.

12. Schaum nach einem der vorstehenden Ansprüche, wobei die Zusammensetzung frei von Peroxiden ist.

13. Schaum nach einem der vorstehenden Ansprüche, wobei die Zusammensetzung ferner mindestens ein Mineralöl umfasst.

14. Kunstleder, umfassend zwei oder mehr Schichten, wobei eine Schicht der Schaum nach einem der vorstehenden Ansprüche ist.

## Revendications

1. Mousse formée à partir d'une composition, dans laquelle la composition comprend :
au moins 50 % en poids, sur la base de la composition, d'un copolymère éthylène/alpha-oléfine ayant une masse volumique allant de 0,840 g/cm³ à 0,910 g/cm³ et un indice de fusion (I₂) allant de 0,5 à 12,0 g/10 min, un copolymère séquencé oléfinique ayant une masse volumique allant de 0,860 g/cm³ à 0,890 g/cm³ et un indice de fusion (I₂) allant de 0,5 à 12,0 g/10 min, ou un mélange de ceux-ci ;
de 30 % en poids à 50 % en poids, sur la base de la composition, d'un interpolymère d'éthylène contenant de l'époxy E/X/Y/Z, E étant un monomère d'éthylène et représentant plus de 50 % en poids de l'interpolymère, X étant un (méth)acrylate, (méth)acrylate d'alkyle, ou acétate de vinyle et représentant de 0 à 40 % en poids de l'interpolymère, Y étant le méthacrylate de glycidyle représentant 0,5 à 13 % en poids de l'interpolymère, et Z étant un motif copolymère dérivé de comonomères choisis dans le groupe constitué de monoxyde de carbone, dioxyde de soufre, et acrylonitrile et représentant de 0 à 10 % en poids de l'interpolymère, le % en poids étant basé sur la quantité totale de monomères polymérisables ;
de 0,5 à 5 % en poids, sur la base de la composition, d'un agent d'expansion chimique ;
de 0,1 à 1 % en poids, sur la base de la composition, d'un activateur ; et
moins de 0,05 % en poids, sur la base de la composition, d'un agent de durcissement.

2. Mousse selon la revendication 1, dans laquelle X représente de 1 à 40 % en poids de l'interpolymère.

3. Mousse selon l'une quelconque revendication précédente, dans laquelle l'agent d'expansion chimique se décompose pour libérer un ou plusieurs composés azoïques ou contenant de l'azote.

4. Mousse selon la revendication 3, dans laquelle l'interpolymère d'éthylène contenant de l'époxy est un interpolymère d'éthylène contenant de l'époxy, réticulé, produit par réaction du méthacrylate de glycidyle et du ou des composés azoïques ou contenant de l'azote libérés par l'agent d'expansion chimique.

5. Mousse selon l'une quelconque revendication précédente, dans laquelle l'agent d'expansion chimique est l'azodicarbonamide.

6. Mousse selon l'une quelconque revendication précédente, dans laquelle l'activateur est un sel d'acide stéarique métallique.

7. Mousse selon la revendication 6, dans laquelle le sel d'acide stéarique métallique est le stéarate de zinc.

8. Mousse selon l'une quelconque revendication précédente, dans laquelle le copolymère éthylène/alpha-oléfine, le copolymère séquencé oléfinique, ou les deux sont des copolymères d'éthylène et d'un comonomère d'alpha-oléfine en C₄-C₈.

9. Mousse selon la revendication 8, dans laquelle le comonomère d'alphaoléfine en C₄-C₈ est l'octène.

10. Mousse selon l'une quelconque revendication précédente, dans laquelle le copolymère éthylène/alpha-oléfine, le copolymère séquencé oléfinique, ou les deux, a une masse volumique allant de 0,860 g/cm³ à 0,890 g/cm³.

11. Mousse selon l'une quelconque revendication précédente, dans laquelle le copolymère éthylène/alpha-oléfine, le copolymère séquencé oléfinique, ou les deux, a un indice de fusion (I₂) allant de 3,0 g/10 min à 7,0 g/10 min.

12. Mousse selon l'une quelconque revendication précédente, dans laquelle la composition est exempte de peroxydes.

13. Mousse selon l'une quelconque revendication précédente, dans laquelle la composition comprend en outre au moins une huile minérale.

14. Cuir artificiel comprenant deux couches ou plus, dans lequel une couche est la mousse selon l'une quelconque revendication précédente.
